# EUROPEAN PATENT APPLICATION

(11) **EP 4 595 751 A1**
(43) Date of publication of application: **06.08.2025**
(21) Application number: 23872288.8
(22) Date of filing: 26.09.2023
(51) Int. Cl.: A01N 43/50, A01C 1/06, A01N 43/38, A01P 21/00

(54) **COMPOSITION FOR COATING PLANT SEED**

(30) Priority: 26.09.2022 JP 2022152418
(71) Applicant: Kaneka Corporation, Osaka-shi, Osaka 530-8288 (JP); Globachem NV, 3800 Sint-Truiden (BE)
(72) Inventor: ASADA, Takayuki, Iwata-shi, Shizuoka 438-0802 (JP); MOHRI, Taku, Iwata-shi, Shizuoka 438-0802 (JP); YAMANE, Hiroaki, Iwata-shi, Shizuoka 438-0802 (JP); NOJIRI, Masutoshi, Iwata-shi, Shizuoka 438-0802 (JP); WATANABE, Go, Tokyo 107-6028 (JP); CLAES, Francis, 3800 Sint-Truiden (BE); VAN DAELE, Guy, 3800 Sint-Truiden (BE)
(74) Representative: Hoffmann Eitle
(86) International application number: PCT/JP2023/034812
(87) International publication number: WO 2024/071065

(57) **Abstract**

This invention provides a composition for coating plant seeds that can promote the initial plant growth or that can promote the plant growth under stress conditions. Compositions for coating plant seeds according to one or more embodiments of the present invention comprise allantoin, amino acid, and an agriculturally acceptable carrier. Said amino acid is preferably L-tryptophan. Other one or more embodiments of the present invention relate to coated seeds comprising plant seeds and, on the surface of the seeds, a composition comprising allantoin and amino acid.

## Description

### Technical Field

The present application discloses a composition for coating plant seeds, coated seeds, a method for cultivating plants, a composition for promoting the initial plant growth, and a composition for promoting the plant growth under stress conditions.

### Background Art

As a method for applying a useful component for plant growth to plants, a method of coating seeds with a composition comprising a useful component is known. This method enables efficient supply of a useful component to plant seeds with the use of a smaller amount of a useful component, compared with methods of applying a useful component to leaves, soil, or water. Accordingly, treatment of seeds with a composition comprising a useful component is expected as a means that enables supply of a useful component to plants with small environmental burden at low cost.

Patent Literature 1 describes a seed-treating composition comprising aromatic amino acid, such as tryptophan, phenylalanine, or tyrosine, and gibberellin. Patent Literature 1 also describes that treatment of wheat seeds with tryptophan facilitates germination of wheat seeds under non-stress conditions and under salt stress conditions. Patent Literature 1 further describes that treatment of wheat seeds with tryptophan and gibberellin synergistically facilitates an increase in seedling fresh weights under non-stress conditions and under salt stress conditions.

Patent Literature 2 describes that use of phenyllactic acid having a root promoting effect on plants in combination with tryptophan enhances a root promoting effect to a significant extent. Patent Literature 2 further describes treatment of seeds with a mixture of phenyllactic acid and tryptophan.

Allantoin (5-ureidohydantoin) is an intermediate product that is generated during the process of degradation of nucleic acid bases (purine bases). **In** plant bodies, allantoin is generated from 5-hydroxyisouric acid with the aid of allantoin synthase (AS) and then degraded into allantoic acid with the aid of allantoinase (ALN). Non-Patent Document 1 discloses that an aln-1 mutant derived from *Arabidopsis thaliana* by deletion of the ALN gene to accumulate allantoin in the plant body has higher dehydration stress resistance than wild-type plants.

Patent Literature 3 discloses an agent for enhancing high-temperature resistance of a plant comprising, as an active ingredient, allantoin.

### Citation List

### Patent Literature

Patent Literature 1: WO 2018/215783
Patent Literature 2: WO 2009/104405
Patent Literature 3: WO 2017/130630

### Non-Patent Literature

Non-Patent Literature 1: S. Watanabe et al., Plant Cell Environ., 2014, 37: pp. 1022-1036

### Summary of Invention

### Technical Problem

**In** order to increase the final yield in cultivation of crop plants, it is critical to promote the initial growth immediately after germination from seeds. To this end, a means for promoting the initial plant growth has been awaited.

Also, a means for promoting the plant growth under stress conditions, such as salt stress conditions, has been awaited.

Accordingly, the present application discloses a composition for coating plant seeds that can promote the initial plant growth or that can promote the plant growth under stress conditions.

The present application also discloses a method for cultivating coated seeds and plants using such composition.

The present application also discloses a composition for promoting the initial plant growth and a composition for promoting the plant growth under stress conditions.

### Solution to Problem

The present application discloses one or more embodiments described below.
(1) A composition for coating plant seeds comprising allantoin, amino acid, and an agriculturally acceptable carrier.
(2) The composition according to (1), wherein said amino acid is L-tryptophan.
(3) The composition according to (1) or (2), which comprises 0.009 parts by weight to 50 parts by weight of said amino acid, relative to 100 parts by weight of the allantoin.
(4) The composition according to any of (1) to (3), which comprises 10 g or more of the allantoin, relative to the amount of the composition used for coating 1 tonne of plant seeds.
(5) The composition according to any of (1) to (4), which comprises 0.045 g or more of said amino acid, relative to the amount of the composition used for coating 1 tonne of plant seeds.
(6) The composition according to any of (1) to (5), which is used for promoting the initial plant growth.
(7) The composition according to any of (1) to (5), which is used for promoting the plant growth under stress conditions.
(8) The composition according to any of (1) to (5), which is used for increasing the plant yield.
(9) Coated seeds comprising:
   plant seeds; and
   on the surface of the seeds, a composition comprising allantoin and amino acid.
(10) The coated seeds according to (9), wherein said amino acid is L-tryptophan.
(11) The coated seeds according to (9) or (10), wherein the composition comprises 0.009 parts by weight to 50 parts by weight of said amino acid, relative to 100 parts by weight of the allantoin.
(12) The coated seeds according to any of (9) to (11), which comprise 10 g or more of the allantoin, relative to 1 tonne of the coated seeds.
(13) The coated seeds according to any of (9) to (12), which comprise 0.045 g or more of said amino acid, relative to 1 tonne of the coated seeds.
(14) A method for cultivating plants comprising:
   seeding the coated seeds according to any of (9) to (13); and
   growing the plants from the seeded coated seeds.
(15) The method according to (14), wherein the step of growing plants comprises promoting the initial plant growth.
(16) The method according to (14) or (15), wherein the step of growing plants comprises increasing the density of the plants, which is determined by dividing the fresh weight of the aboveground part of the plants by the height of the aboveground part of the plants.
(17) The method according to any of (14) to (16), wherein the step of growing plants comprises increasing the plant yield.
(18) The method according to any of (14) to (17), wherein the step of growing plants comprises growing the plants under stress conditions.
(19) A composition for promoting the initial plant growth comprising allantoin and 0.009 parts by weight to 50 parts by weight of amino acid, relative to 100 parts by weight of the allantoin.
(20) A composition for promoting the plant growth under stress conditions comprising allantoin and 0.009 parts by weight to 50 parts by weight of amino acid, relative to 100 parts by weight of the allantoin.
(21) A composition for increasing the plant yield comprising allantoin and 0.009 parts by weight to 50 parts by weight of amino acid, relative to 100 parts by weight of the allantoin.

The description incorporates the contents disclosed by JP Patent Application No. 2022-152418, from which the present application claims priority.

### Advantageous Effects of Invention

The composition for coating plant seeds according to one or more embodiments of the present invention, coated seeds using such composition, and a method for cultivating plants using such composition are useful for promotion of the initial plant growth and for promotion of the plant growth under stress conditions.

Application of the composition for promoting the initial plant growth according to one or more embodiments of the present invention to plants enables promotion of the initial plant growth.

Application of the composition for promoting the plant growth under stress conditions according to one or more embodiments of the present invention to plants enables promotion of the plant growth under stress conditions.

### Brief Description of Drawings

[Figure 1] Figure 1 shows the rate of change (%) in the fresh weight of the aboveground part of *Zea mays* grown under non-stress conditions from seeds treated with different amounts of tryptophan and allantoin in Example 1, relative to that of the control group.
[Figure 2] Figure 2 shows the rate of change (%) in the fresh weight of the aboveground part, the density, and the dry weight of the underground part of *Zea mays* grown under non-stress conditions from seeds treated with different amounts of tryptophan and allantoin in Example 1, relative to those of the control group.
[Figure 3] Figure 3 shows the rate of change (%) in the fresh weight of the aboveground part of *Zea mays* grown under salt stress conditions from seeds treated with different amounts of tryptophan and allantoin in Example 2, relative to that of the control group.
[Figure 4] Figure 4 shows the rate of change (%) in the fresh weight of the aboveground part, the density, and the dry weight of the underground part of *Zea mays* grown under salt stress conditions from seeds treated with different amounts of tryptophan and allantoin in Example 2, relative to those of the control group.
[Figure 5] Figure 5 shows the rate of change (%) in the fresh weight of the aboveground part of wheat grown under non-stress conditions from seeds treated with different amounts of tryptophan and allantoin in Example 3, relative to that of the control group.
[Figure 6] Figure 6 shows the rate of change (%) in the density of wheat grown under salt stress conditions from seeds treated with different amounts of tryptophan and allantoin in Example 4, relative to that of the control group.
[Figure 7] Figure 7 shows the rate of change (%) in the fresh weight of the aboveground part of soybean grown under non-stress conditions from seeds treated with different amounts of tryptophan and allantoin in Example 5, relative to that of the control group.
[Figure 8] Figure 8 shows the rate of change (%) in the dry weight of the underground part of soybean grown under salt stress conditions from seeds treated with different amounts of tryptophan and allantoin in Example 6, relative to that of the control group.
[Figure 9] Figure 9 shows the ear yield of *Zea mays* grown in the field from *Zea mays* seeds coated with 0.25 g of tryptophan per tonne of seeds, *Zea mays* seeds coated with 1000 g of allantoin per tonne of seeds, and *Zea mays* seeds coated with 0.25 g of tryptophan and 1000 g of allantoin per tonne of seeds in Example 7.

### Description of Embodiments

Hereafter, one or more embodiments of the present invention are described.

### <Allantoin>

Allantoin is also referred to as "5-ureidohydantoin," and a free form thereof has a structure represented by the formula shown below.

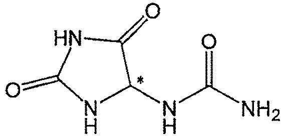

Allantoin has an asymmetric carbon (indicated by "*" in the formula), and it exists as two enantiomers (R)-allantoin and (S)-allantoin. Allantoin used in one or more embodiments of the present invention may be (R)-allantoin or (S)-allantoin, or it may be in the form of a mixture of (R)-allantoin and (S)-allantoin. Allantoin can also be synthesized from, for example, glyoxylic acid and urea. Alternatively, allantoin may be derived or obtained from plants or microorganisms.

Allantoin may encompass various forms of allantoin, such as a free form in which allantoin is neither bonded to another substance nor ionized, a salt thereof, a hydrate thereof, and a mixture of any thereof.

### <Amino acid>

In the present application, "amino acid" may be any agriculturally acceptable amino acid, with tryptophan being preferable. In the case of an optically active amino acid, said amino acid may be in the L-form, the D-form, or a mixture of the L-form and the D-form, with the L-form being preferable. A single type of amino acid may be used, or a mixture of two or more types of amino acids may be used. The most preferable amino acid is L-tryptophan.

Examples of amino acids include various forms of amino acids, such as a free form in which said amino acid is neither bonded to another substance nor ionized, a salt formed by said amino acid with an acid or a base, a hydrate thereof, and a mixture of any thereof.

### <Agriculturally acceptable carrier>

In the present application, an "agriculturally acceptable carrier" may be any carrier, provided that it can hold allantoin and said amino acid, and it may be a liquid carrier or a solid carrier. An example of a solid carrier is a hydrous solid substance. A solid carrier may be in the form of powder or granule.

An "agriculturally acceptable carrier" is preferably a liquid carrier, such as water or an organic solvent. Water as a carrier is not limited to pure water, it may be an aqueous solution, an aqueous suspension, aqueous gel, or aqueous slurry, and a viscous substance may be used. An organic solvent is not limited to a pure organic solvent, and it may be an organic-solvent-based solution, suspension, gel, or slurry, and a viscous substance may be used. Examples of organic solvents include methyl ether, ethyl ether, propyl ether, and butyl ether.

An agriculturally acceptable carrier is preferably a liquid carrier comprising an aqueous solution of a hydrous substance dissolved in water or a solid carrier comprising a water-soluble hydrous substance. Examples of hydrous substances include polyvinylpyrrolidone, alkylene oxide random/block copolymers, a vinyl acetate/vinylpyrrolidone copolymer, an alkylated vinylpyrrolidone copolymer, polyalkylene glycol including polypropylene glycol and polyethylene glycol, polyvinyl acetate, polyvinyl alcohol, gelatin, agar, gum Arabic, gum karaya, gum tragacanth, guar gum, Locust bean gum, xanthan gum, ghatti gum, carrageenan, alginate, casein, dextran, pectin, chitin, 2-hydroxyethyl starch, 2-aminoethyl starch, 2-hydroxyethylcellulose, methylcellulose, carboxymethylcellulose salt, cellulose sulfate, polyacrylamide, alkali metal salt of a maleic anhydride copolymer, and alkali metal salt of poly(meth)acrylate.

A composition for coating plant seeds may further comprise at least one of additives indicated below, according to need. Examples of additives include, but are not limited to, a moisturizing agent, a colorant, a defoaming agent, an UV protective agent, an antifreezing agent, a preservative, a biological control agent or biocide, a surfactant, an emulsifier, an extender, a scavenger, a plasticizer, a phospholipid, a fluidizing agent, a coalescing agent, wax, and/or a filler (e.g., clay, talc, glass fiber, cellulose, and pulverized wood material).

### <Plant>

In one or more embodiments of the present invention, "plants" are not particularly limited, and crop plants are preferable. Examples of crop plants include *Zea mays* (e.g., corn or maize), wheat, barley, rye, oat, rice, soybean, canola (rapeseed), cotton, sunflower, sugar beet, potato, tobacco, broccoli, lettuce, cabbage, cauliflower, coconut, tomato, cucumber, eggplant, melon, pumpkin, okra, capsicum (pepper), water melon, carrot, radish, onion, leek, flower plants and ornamentals, turf grass, and pasture grass. In one or more embodiments of the present invention, "seeds" can be seeds of such plants.

### <Composition for coating plant seeds>

The first embodiment of the present invention relates to a composition for coating plant seeds comprising allantoin, amino acid, and an agriculturally acceptable carrier.

By treating plant seeds with the composition for coating plant seeds according to the present embodiment, plant growth from the seeds, and, in particular, the initial growth after germination, is promoted. The term "initial growth" generally refers to a period from germination to the middle of the vegetative growth stage at which production of dry matter begins to rapidly increase. For example, the initial growth is growth within 90, 60, 30, 25, 21, or 14 days after germination.

By treating plant seeds with the composition for coating plant seeds according to the present embodiment, growth under stress conditions, such as salt stress conditions, is promoted.

The numerical value determined by dividing the fresh weight of the aboveground part of the plants by the height of the plants is defined as the "density." The composition for coating plant seeds according to the present embodiment is, in particular, characterized as increasing the "fresh weight of the aboveground part," the "density," and the "dry weight of the underground part" of plants. Because of the effects as described above, the composition for coating plant seeds according to the present embodiment can increase the plant yield. An increase in the plant yield indicates a weight increase in a site of a plant harvested as a crop, and a weight increase in fruits, seeds, leaves, stalks, or roots harvested as a crop is particularly preferable.

Specifically, the composition for coating plant seeds according to the present embodiment is a composition for promoting the initial plant growth, a composition for promoting the plant growth under stress conditions, a composition for increasing the plant yield, or a composition for increasing the plant density (as defined above).

The composition for coating plant seeds according to the present embodiment can be a liquid or solid depending on the form of the agriculturally acceptable carrier. When the composition for coating plant seeds according to the present embodiment is a liquid composition, plant seeds may be coated by soaking the plant seeds in the liquid composition or spraying the liquid composition onto the plant seeds, and the coated seeds may then be dried, according to need. When the composition for coating plant seeds according to the present embodiment is a solid composition such as a powder, the dried solid composition may be brought into contact with the plant seeds to coat the seeds. Alternatively, a liquid or paste prepared with the addition of water to the solid composition may be brought into contact with the plant seeds to coat the seeds, and the coated seeds may then be dried, according to need.

Concerning the composition for coating plant seeds according to the present embodiment, said amino acid is L-tryptophan. By coating plant seeds with allantoin in combination with L-tryptophan, in particular, the plant growth can be promoted to a significant extent.

The composition for coating plant seeds according to the present embodiment comprises amino acid in an amount of 0.009 parts by weight or more, preferably 0.0225 parts by weight or more, and more preferably 0.045 parts by weight or more, relative to 100 parts by weight of allantoin. The upper limit, relative to 100 parts by weight of allantoin, is 50 parts by weight, preferably 20 parts by weight, and more preferably 18 parts by weight. When the weight ratio of allantoin to amino acid is within such range, synergistic effects of promoting the plant growth are particularly significant.

The concentration of allantoin and that of amino acid in the composition for coating plant seeds according to the present embodiment are not particularly limited. The composition for coating plant seeds used to coat 1 tonne of plant seeds comprises allantoin in an amount of preferably 10 g or more, more preferably 25 g or more, and particularly preferably 50 g or more. While the upper limit is not particularly limited, the composition comprises preferably up to 1000 g, and more preferably up to 500 g of allantoin. The composition for coating plant seeds used to coat 1 tonne of the plant seeds comprises amino acid (L-tryptophan, in particular) in an amount of preferably 0.045 g or more, and particularly preferably 0.225 g or more. While the upper limit is not particularly limited, the composition comprises preferably up to 9 g, and particularly preferably up to 5 g of amino acid.

### <Coated seeds>

The second embodiment of the present invention relates to coated seeds comprising:
plant seeds; and
on the surface of the seeds, a composition comprising allantoin and amino acid.

The coated seeds according to the present embodiment can be prepared by coating plant seeds with the composition for coating plant seeds according to the first embodiment of the present invention.

Plants that are grown from the coated seeds according to the present embodiment show a high initial growth rate and a high growth rate under stress conditions.

A composition comprising allantoin and amino acid that is present on the seed surface of the coated seeds according to the present embodiment is typically the composition for coating plant seeds according to the first embodiment of the present invention or a composition prepared by dehydrating the composition for coating plant seeds. On the coated seeds according to the present embodiment, the composition comprising allantoin and amino acid is not exclusively present on the seed surface, and a part thereof may infiltrate the seeds.

Concerning the coated seeds according to the present embodiment, said amino acid is preferably L-tryptophan. By coating plant seeds with allantoin in combination with L-tryptophan, in particular, the plant growth can be promoted to a significant extent.

It is particularly preferable that the composition for coating the coated seeds according to the present embodiment comprise 0.009 parts by weight to 50 parts by weight of amino acid, relative to 100 parts by weight of allantoin. The lower limit of the amount is not particularly limited, provided that the amount is 0.009 parts by weight or more. The lower limit is preferably 0.0225 parts by weight, and more preferably 0.045 parts by weight. In addition, the upper limit is not particularly limited, provided that the amount is 50 parts by weight or less. The upper limit is preferably 20 parts by weight, and more preferably 18 parts by weight. When the weight ratio of allantoin to amino acid is within such range, synergistic effects of promoting the plant growth are particularly significant.

The content of allantoin and that of amino acid in the coated seeds according to the present embodiment are not particularly limited. The coated seeds according to the present embodiment comprise allantoin in an amount of preferably 10 g or more, more preferably 25 g or more, and particularly preferably 50 g or more, relative to 1 tonne thereof. While the upper limit is not particularly limited, the composition comprises preferably up to 1000 g, and more preferably up to 500 g of allantoin. The coated seeds according to the present embodiment comprise amino acid (L-tryptophan, in particular) in an amount of preferably 0.045 g or more, and particularly preferably 0.225 g or more, relative to 1 tonne thereof. While the upper limit is not particularly limited, the composition comprises preferably up to 9 g, and particularly preferably up to 5 g of amino acid.

### <Method for growing plants>

The third embodiment of the present invention relates to a method for cultivating plants comprising:
seeding the coated seeds according to the second embodiment of the present invention; and
growing the plants from the seeded coated seeds.

According to the method of the third embodiment of the present invention, the plant growth, and, in particular, the initial plant growth, is promoted, and plants can be cultivated at a high yield. In addition, plants can be efficiently cultivated under stress conditions, such as salt stress conditions.

In the method according to the present embodiment, the step of seeding the coated seeds and the step of growing plants from the seeded coated seeds can be performed under the conditions adequately selected in accordance with plants.

In the method according to the present embodiment, the growth, and, in particular, the initial growth is promoted in the step of growing plants from the seeded coated seeds. Growth promotion is preferably an increase in the fresh weight of the aboveground part of plants and/or in the plant density (as defined above).

An extent of an increase in the fresh weight of the aboveground part according to the method of the present embodiment is not particularly limited. A rate of an increase in the fresh weight of the aboveground part is preferably 1% or more, more preferably 2% or more, further preferably 5% or more, and particularly preferably 10% or more, compared with a rate of an increase when plants are cultivated from the seeds that are not coated with the composition for coating plant seeds. The upper limit of an increase in the fresh weight of the aboveground part is not particularly limited from the viewpoint of a commercial value, and the upper limit is preferably 100%, and particularly preferably 80%.

An extent of an increase in the density according to the method of the present embodiment is not particularly limited. A rate of an increase in the density is preferably 1% or more, more preferably 2% or more, further preferably 5% or more, and particularly preferably 10% or more, compared with a rate of an increase when plants are cultivated from the seeds that are not coated with the composition for coating plant seeds. The upper limit of an increase in the density is not particularly limited from the viewpoint of a commercial value, and the upper limit is preferably 100%, and particularly preferably 80%.

In the method according to the present embodiment, the step of growing plants from the seeded coated seeds comprises, for example, growing plants under stress conditions. Examples of stress conditions include salt stress conditions, high-temperature stress conditions, and low-temperature stress conditions.

### <Other compositions>

The fourth embodiment of the present invention relates to a composition for promoting the initial plant growth comprising allantoin and 0.009 parts by weight to 50 parts by weight of amino acid, relative to 100 parts by weight of the allantoin.

The fifth embodiment of the present invention relates to a composition for promoting the plant growth under stress conditions comprising allantoin and 0.009 parts by weight to 50 parts by weight of amino acid, relative to 100 parts by weight of the allantoin.

The sixth embodiment of the present invention relates to a composition for increasing the plant yield comprising allantoin and 0.009 parts by weight to 50 parts by weight of amino acid, relative to 100 parts by weight of the allantoin.

The composition according to the fourth, fifth, or sixth embodiment of the present invention is not limited to a composition for coating seeds, and it may be a composition to be applied to a plant body such as a leaf or to be applied to plants through an adequate route, such as application to soil or water.

In particular, the composition according to the fourth embodiment of the present invention can promote the initial plant growth to a significant extent due to synergistic effects achieved with the use of allantoin in combination with said amino acid.

In particular, the composition according to the fifth embodiment of the present invention can promote the initial plant growth under stress conditions to a significant extent due to synergistic effects achieved with the use of allantoin in combination with said amino acid. Examples of stress conditions include salt stress conditions, high-temperature stress conditions, and low-temperature stress conditions.

The composition according to the sixth embodiment of the present invention can increase the plant yield to a significant extent due to synergistic effects achieved with the use of allantoin in combination with said amino acid.

In the fourth, the fifth, and the sixth embodiments of the present invention, more preferably, said amino acid is L-tryptophan.

### Examples

The present invention is described in greater detail with reference to the following examples, although the present invention is not limited to these examples.

In the following description and the reference figures, "tryptophan" or "Trp" indicates L-tryptophan, and "ALN" indicates allantoin.

### <Example 1>

### Cultivation of Zea mays from coated seeds under non-stress conditions

### Method of experimentation

Dent corn seeds (100 g; the variety: Snow-dent "Otoha") were coated with 800 µL of a coating solution comprising tryptophan, allantoin, polyvinyl alcohol, and a coloring dye in water using a coater (SATEC). Coating was performed using either or both of tryptophan in an amount of 0 g, 0.045 g, 0.225 g, or 0.45 g and allantoin in an amount of 0 g, 50 g, or 500 g per tonne of seeds (MT).

Culture soil was filled into 12-cm vinyl pots, and the coated dent corn seeds were seeded at 4 grains/pot. After germination, a differently grown strain was thinned to retain 3 strains in a pot. Cultivation was performed in a glass greenhouse, and inspection was performed 21 days after seeding. The height, the fresh weight of the aboveground part, and the dry weight of the underground part were measured, and the density (the fresh weight of the aboveground part/the height) was determined. The underground part was washed with water, dried at 80 °C for 2 days, and then weighed to determine the dry weight of the underground part. The test was repeated 6 times, and the average was determined.

### Results

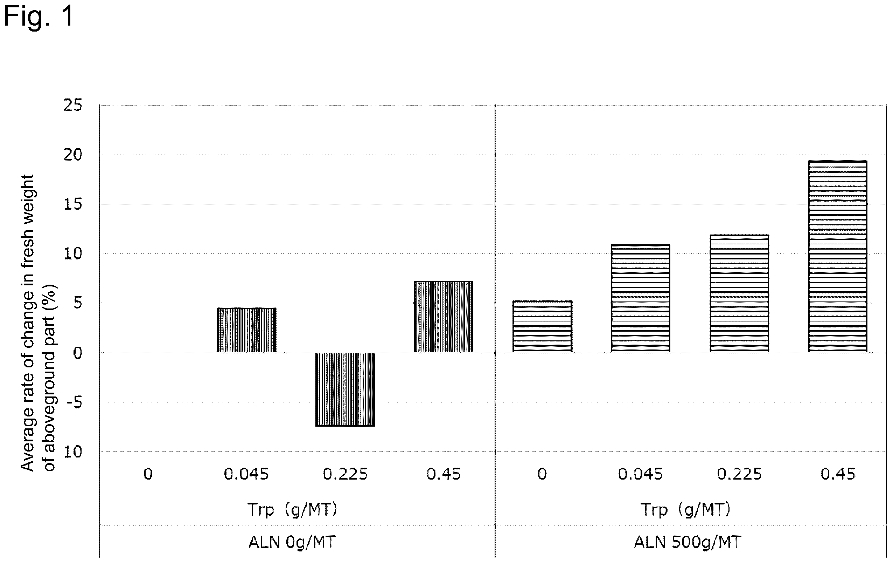

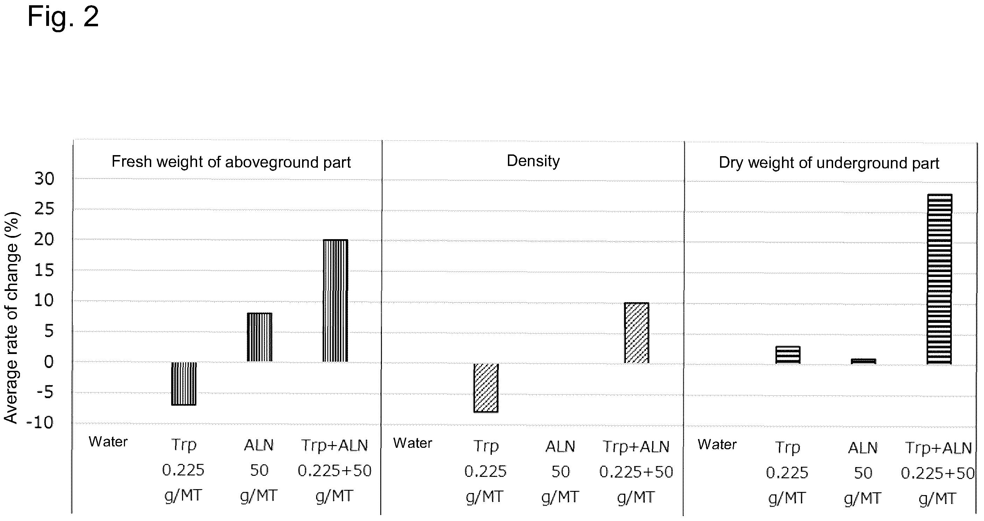

The fresh weight of the aboveground part, the density, and the dry weight of the underground part measured for groups each treated with different amounts of tryptophan and allantoin were indicated as the rates of changes (%), relative to the fresh weight of the aboveground part, the density, and the dry weight of the underground part of plants in the test group (control group) treated with a coating solution not comprising tryptophan or allantoin. The results concerning the fresh weight of the aboveground part are shown in Figure 1, and the results concerning the fresh weight of the aboveground part, the density, and the dry weight of the underground part are shown in Figure 2.

As shown in Figure 1, the fresh weight of the aboveground part 3 weeks after seeding of the seeds coated selectively with tryptophan was -7% to 7% of the fresh weight without treatment, and effects of promoting the initial growth were attained to a certain extent with the use of tryptophan by itself. When seeds were coated selectively with allantoin, the fresh weight of the aboveground part was increased by 5%, and effects of promoting the initial growth were attained to a certain extent with the use of allantoin by itself. With the use of allantoin in combination with tryptophan, the fresh weight of the aboveground part was increased by 11% to 19%, and remarkable effects of promoting the initial growth were attained due to synergistic effects of allantoin and tryptophan.

In addition to the fresh weight of the aboveground part, as shown in Figure 2, remarkable effects of promoting the initial growth were attained in respect of the density and the dry weight of the underground part due to synergistic effects of allantoin used in combination with tryptophan.

An increase in the fresh weight of the aboveground part may indicate spindly growth; that is, elongation growth of a plant without substantial growth. A plant showing spindly growth is inferior to a plant showing sufficient growth in terms of health, fragility, pest-resistance, and susceptibility to environmental changes such as hotness or coldness, and, accordingly, such plant is not preferable. In order to verify that a plant has sufficiently grown to have a short fat body instead of a spindly body, evaluation was performed using the density as the indicator. Figure 2 demonstrates that use of allantoin in combination with tryptophan would synergistically increase the density, compared with the use of allantoin or tryptophan by itself. This indicates that an increase in the yield can be expected by promoting the initial growth.

### <Example 2>

### Cultivation of Zea mays from coated seeds under salt stress conditions

### Method of experimentation

Dent corn seeds (100 g; the variety: Snow-dent "Otoha") were coated with 800 µL of a coating solution comprising tryptophan, allantoin, polyvinyl alcohol, and a coloring dye in water using a coater (SATEC). Coating was performed using either or both of tryptophan in an amount of 0 g, 0.045 g, 0.225 g, or 5 g and allantoin in an amount of 0 g, 10 g, 25 g, 50 g, or 500 g per tonne of seeds.

Culture soil comprising sodium chloride at 6.0 g/L of the soil was filled into 7.5-cm pots, and the coated dent corn seeds were seeded at 1 grain/pot. Cultivation was performed in a glass greenhouse, and inspection was performed 21 days after seeding. The height, the fresh weight of the aboveground part, and the dry weight of the aboveground part were measured, and the density (the fresh weight of the aboveground part/the height) was determined. The test was repeated 9 times, and the average was determined.

### Results

### Fresh weight of aboveground part

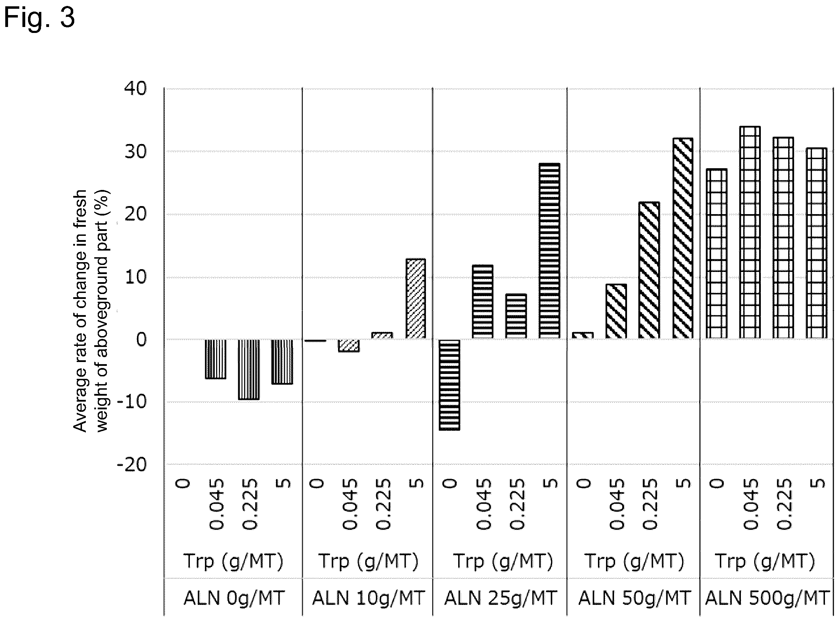

Figure 3 shows the rate of change (%) in the fresh weight of the aboveground part of plants in groups each treated with different amounts of tryptophan and allantoin, relative to the fresh weight of the aboveground part of plants in the test group (control group) treated with a coating solution not comprising tryptophan or allantoin.

As shown in Figure 3, under salt stress conditions, the fresh weight of the aboveground part 3 weeks after seeding of the seeds coated selectively with tryptophan was -10% to -6% of the fresh weight without treatment. No effects of promoting the initial growth were attained with the use of tryptophan by itself. When seeds were coated selectively with allantoin, the fresh weight was -14% to 27% of the fresh weight without treatment. Significant effects of promoting the initial growth were attained depending on the amount of allantoin used. With the use of allantoin in combination with tryptophan, in contrast, the fresh weight of the aboveground part was increased by -2% to 34%, and remarkable effects of promoting the initial growth were attained due to synergistic effects of allantoin and tryptophan.

### Fresh weight of aboveground part, density, and dry weight of underground part

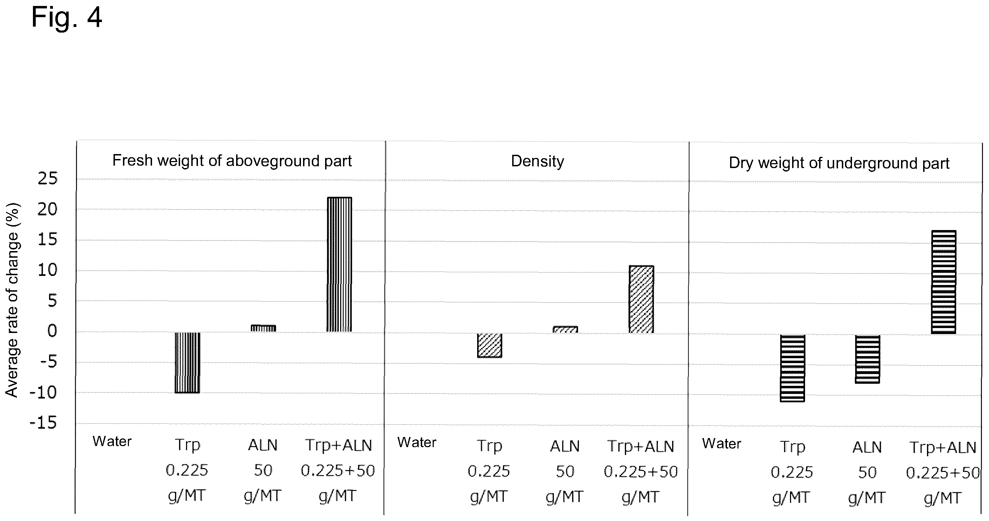

The rates of changes (%) in the fresh weight of the aboveground part, the density (the fresh weight of the aboveground part/the height), and the dry weight of the underground part measured or determined for the test groups, relative to those of the control group were determined. Figure 4 shows the fresh weight of the aboveground part, the density, and the dry weight of the underground part of the control group, those of the group treated with 0.225 g of tryptophan per tonne of seeds, those of the group treated with 50 g of allantoin per tonne of seeds, and those of the group treated with 0.225 g of tryptophan in combination with 50 g of allantoin per tonne of seeds.

As shown in Figure 4, the fresh weight of the aboveground part, the density, and the dry weight of the underground part were synergistically increased when seeds were treated with the use of 0.225 g of tryptophan in combination with 50 g of allantoin per tonne of seeds, compared with the use of tryptophan or allantoin by itself. Effects of seed treatment for promoting the healthy growth were observed under stress conditions.

### <Example 3>

### Cultivation of wheat from coated seeds under non-stress conditions

### Method of experimentation

Wheat seeds (100 g, the variety: Yumechikara) were coated with 800 µL of a coating solution comprising tryptophan, allantoin, polyvinyl alcohol, and a coloring dye in water using a coater (SATEC). Coating was performed using either or both of tryptophan in an amount of 0 g, 0.045 g, 0.45 g, 4.5 g, or 9 g and allantoin in an amount of 0 g or 50 g per tonne of seeds.

Culture soil was filled into 12-cm vinyl pots, and the coated wheat seeds were seeded at 4 grains/pot. After germination, a differently grown strain was thinned to retain 3 strains in a pot. Cultivation was performed in a glass greenhouse, and inspection was performed 2 weeks after seeding. The test was repeated 6 times, and the average was determined.

### Results

### Fresh weight of aboveground part

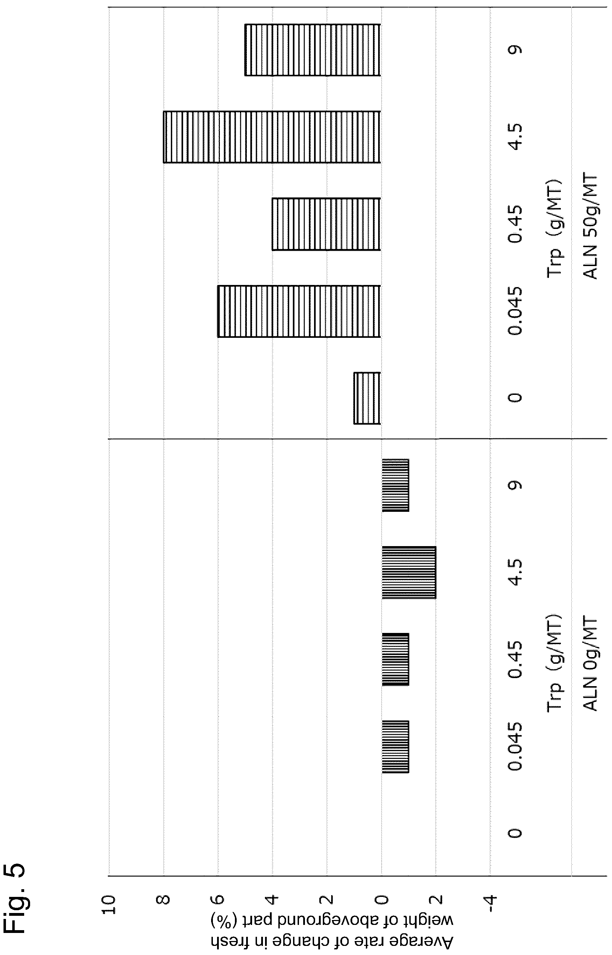

The measured fresh weight of the aboveground part of plants in groups each treated with different amounts of tryptophan and allantoin was indicated as the rate of change (%), relative to the fresh weight of the aboveground part of plants in the test group (control group) treated with a coating solution not comprising tryptophan or allantoin. The results are shown in Figure 5.

As shown in Figure 5, the fresh weight of the aboveground part 2 weeks after seeding of the seeds coated selectively with tryptophan was -2% to **-1%** of the fresh weight without treatment. No effects of promoting the initial growth were attained with the use of tryptophan by itself. When seeds were coated selectively with allantoin, the fresh weight was 1% of the fresh weight without treatment. No effects of promoting the initial growth were attained with the use of allantoin by itself. With the use of allantoin in combination with tryptophan, in contrast, the fresh weight of the aboveground part was increased by 4% to 8%, and remarkable effects of promoting the initial growth were attained due to synergistic effects of allantoin and tryptophan.

### <Example 4>

### Cultivation of wheat from coated seeds under salt stress conditions

### Method of experimentation

Wheat seeds (100 g; the variety: Yumechikara) were coated with 800 µL of a coating solution comprising tryptophan, allantoin, polyvinyl alcohol, and a coloring dye in water using a coater (SATEC). Coating was performed using either or both of tryptophan in an amount of 0 g, 0.045 g, 0.45 g, 4.5 g, or 9 g and allantoin in an amount of 0 g or 50 g per tonne of seeds.

Culture soil comprising sodium chloride at 4.0 g/L of the soil was filled into 7.5-cm pots, and the coated wheat seeds were seeded at 1 grain/pot. Cultivation was performed in a glass greenhouse, and inspection was performed 16 days after seeding. The height and the fresh weight of the aboveground part were measured, and the density (the fresh weight of the aboveground part/the height) was determined. The test was repeated 9 times, and the average was determined.

### Results

### Density

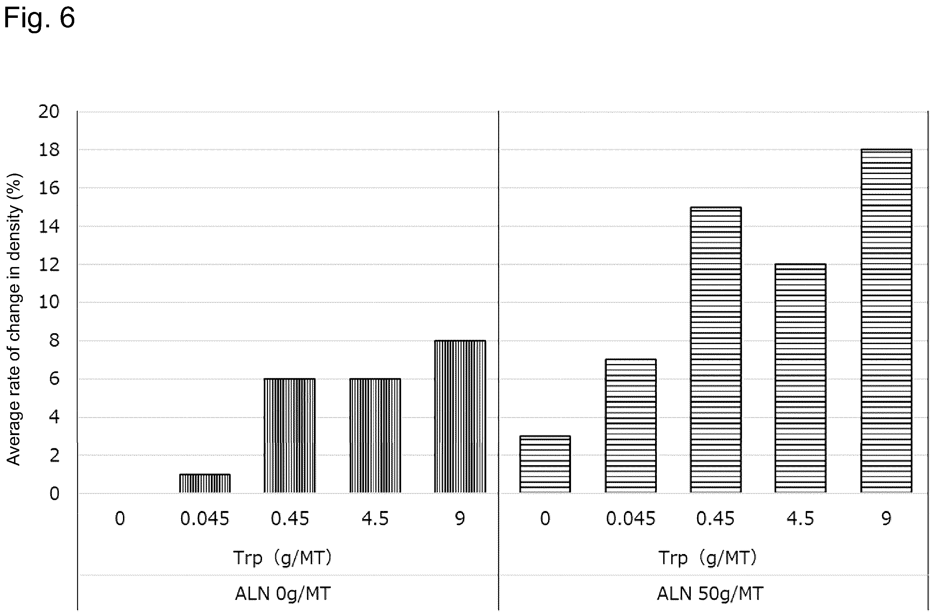

The density of the test groups treated with different amounts of tryptophan and allantoin was indicated as the rate of change (%), relative to the density of the test group (control group) treated with a coating solution not comprising tryptophan or allantoin. The results are shown in Figure 6.

As shown in Figure 6, under salt stress conditions, the density 2 weeks after seeding of the seeds coated selectively with tryptophan was 1% to 8% of the density without treatment. Effects of promoting the initial growth were attained to a certain extent with the use of tryptophan by itself. When seeds were coated selectively with allantoin, in contrast, the density was 3% of the density without treatment, and effects of promoting the initial growth were attained to a certain extent. In addition, the density was increased by 7% to 18% with the use of allantoin in combination with tryptophan, and remarkable effects of promoting the initial growth were attained due to synergistic effects of allantoin and tryptophan.

### <Example 5>

### Cultivation of soybean from coated seeds under non-stress conditions

### Method of experimentation

Soybean seeds (100 g; the variety: Fukuyutaka) were coated with 800 µL of a coating solution comprising tryptophan, allantoin, polyvinyl alcohol, and a coloring dye in water using a coater (SATEC). Coating was performed using either or both of tryptophan in an amount of 0 g, 0.225 g, 0.45 g, or 5 g and allantoin in an amount of 0 g or 25 g per tonne of seeds.

Culture soil was filled into 12-cm vinyl pots, and the coated soybean seeds were seeded at 4 grains/pot. After germination, a differently grown strain was thinned to retain 3 strains in a pot. Cultivation was performed in a glass greenhouse, and inspection was performed 3 weeks after seeding. The test was repeated 6 times, and the average was determined.

### Results

### Fresh weight of aboveground part

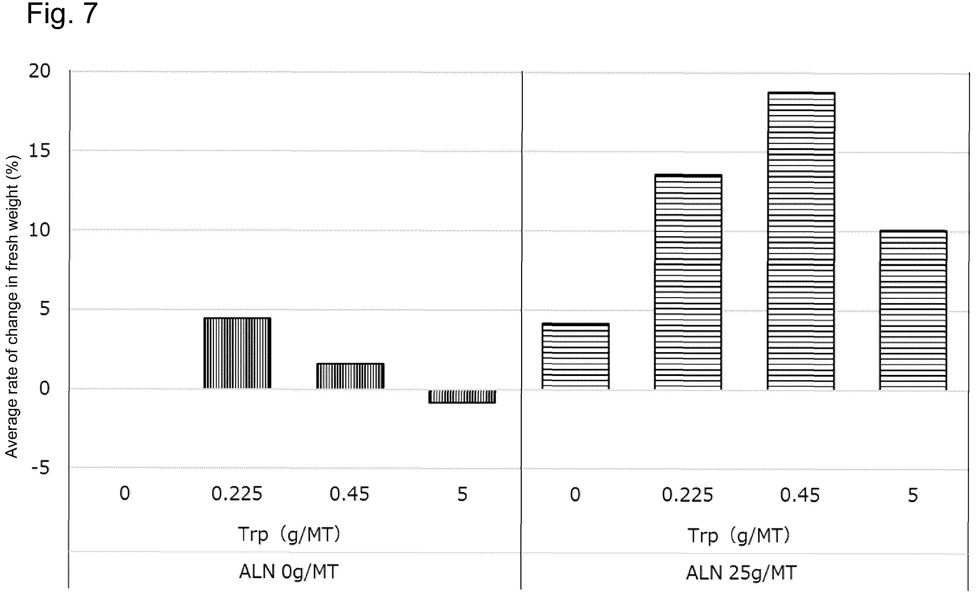

The measured fresh weight of the aboveground part of plants in groups each treated with different amounts of tryptophan and allantoin was indicated as the rate of change (%), relative to the fresh weight of the aboveground part of plants in the test group (control group) treated with a coating solution not comprising tryptophan or allantoin. The results are shown in Figure 7.

As shown in Figure 7, the fresh weight of the aboveground part 3 weeks after seeding of the seeds coated selectively with tryptophan was -1% to 4% of the fresh weight without treatment. Effects of promoting the initial growth were attained to a certain extent depending on the amount of tryptophan used by itself. When seeds were coated selectively with allantoin, the fresh weight of the aboveground part was 4%, and effects of promoting the initial growth were attained to a certain extent with the use of allantoin by itself. With the use of allantoin in combination with tryptophan, in contrast, the fresh weight of the aboveground part was increased by 10% to 19%, and remarkable effects of promoting the initial growth were attained due to synergistic effects of allantoin and tryptophan.

### <Example 6>

### Cultivation of soybean from coated seeds under salt stress conditions

### Method of experimentation

Soybean seeds (100 g; the variety: Fukuyutaka) were coated with 800 µL of a coating solution comprising tryptophan, allantoin, polyvinyl alcohol, and a coloring dye in water using a coater (SATEC). Coating was performed using either or both of tryptophan in an amount of 0 g, 0.045 g, 0.225 g, 0.45 g, or 5 g and allantoin in an amount of 0 g or 50 g per tonne of seeds.

Culture soil comprising sodium chloride at 1.0 g/L of the soil was filled into 7.5-cm pots, and the coated soybean seeds were seeded at 1 grain/pot. Cultivation was performed in a glass greenhouse, and inspection was performed 3 weeks after seeding. The dry weight of the underground part was measured. The test was repeated 9 times, and the average was determined.

### Results

### Dry weight of underground part

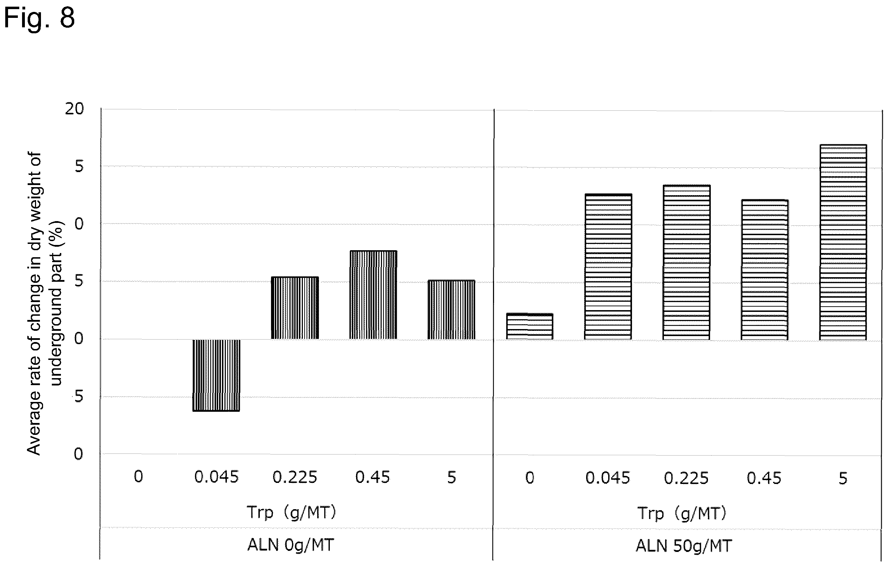

Figure 8 shows the rate of change (%) in the dry weight of the underground part of plants in groups each treated with different amounts of tryptophan and allantoin, relative to the dry weight of the underground part of plants in the test group (control group) treated with a coating solution not comprising tryptophan or allantoin.

As shown in Figure 8, under salt stress conditions, the dry weight of the underground part 3 weeks after seeding of the seeds coated selectively with tryptophan was -6% to 8% of the dry weight without treatment. Effects of promoting the initial growth were attained to a certain extent depending on the amount of tryptophan used by itself. When seeds were coated selectively with allantoin, the dry weight of the underground part was 2% of the dry weight without treatment, and effects of promoting the initial growth were attained to a certain extent. With the use of allantoin in combination with tryptophan, in contrast, the dry weight of the underground part was increased by 12% to 17%, and remarkable effects of promoting the initial growth were attained due to synergistic effects of allantoin and tryptophan.

### <Example 7>

### Field test of Zea mays

### Preparation of coated seeds

In the same manner as in Example 1, *Zea mays* seeds coated with 0.25 g of tryptophan per tonne of seeds, *Zea mays* seeds coated with 1000 g of allantoin per tonne of seeds, and *Zea mays* seeds coated with 0.25 g of tryptophan and 1000 g of allantoin per tonne of seeds were prepared. As a control group, seeds without coating were prepared.

### Field cultivation

Location: the Wilderen MAR field, the Kingdom of Belgium
Variety: LIKEiT
Date of seeding: April 27, 2020
Date of harvesting: October 12, 2020

Cultivation was performed in accordance with the conventional fertilization management technique and pest management technique, and the yield was inspected. Inspection of yield: 120 strains/group; the number of repetitions: 4

### Results

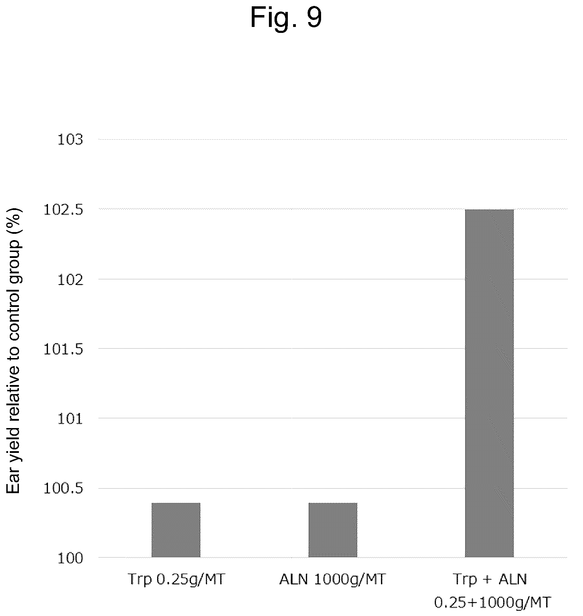

Figure 9 shows the percentage (%) of the ear yield of the *Zea mays* cultivated from the 3 types of coated seeds, relative to the ear yield of *Zea mays* cultivated from the seeds of the control group without coating, which is designated as 100%.

As shown in Figure 9, seeds coated with 0.25 g of tryptophan per tonne of seeds, with 1000 g of allantoin per tonne of seeds, or with 0.25 g of tryptophan in combination with 1000 g of allantoin per tonne of seeds were seeded in the field, cultivated, harvested, and then inspected. The ear yield was 100.4% with the use of tryptophan alone and it was 100.4% with the use of allantoin alone, relative to the control group. An increase was not observed in the yield. With the use of tryptophan in combination with allantoin, in contrast, the ear yield was 102.5%, relative to the control group. That is, the ear yield was increased by 2.5% due to synergistic effects of tryptophan and allantoin. Thus, effects of seed treatment to increase the final yield were observed.

All publications, patents, and patent applications cited herein are incorporated herein by reference in their entirety.

## Claims

1. A composition for coating plant seeds comprising allantoin, amino acid, and an agriculturally acceptable carrier.

2. The composition according to claim 1, wherein said amino acid is L-tryptophan.

3. The composition according to claim 1 or 2, which comprises 0.009 parts by weight to 50 parts by weight of said amino acid, relative to 100 parts by weight of the allantoin.

4. The composition according to claim 1 or 2, which comprises 10 g or more of the allantoin, relative to the amount of the composition used for coating 1 tonne of plant seeds.

5. The composition according to claim 1 or 2, which is used for promoting the initial plant growth.

6. The composition according to claim 1 or 2, which is used for promoting the plant growth under stress conditions.

7. The composition according to claim 1 or 2, which is used for increasing the plant yield.

8. Coated seeds comprising:
plant seeds; and
on the surface of the seeds, a composition comprising allantoin and amino acid.

9. The coated seeds according to claim 8, wherein said amino acid is L-tryptophan.

10. The coated seeds according to claim 8 or 9, wherein the composition comprises 0.009 parts by weight to 50 parts by weight of said amino acid, relative to 100 parts by weight of the allantoin.

11. The coated seeds according to claim 8, which comprise 10 g or more of the allantoin, relative to 1 tonne of the coated seeds.

12. A method for cultivating plants comprising:
seeding the coated seeds according to claim 8; and
growing the plants from the seeded coated seeds.

13. The method according to claim 12, wherein the step of growing plants comprises promoting the initial plant growth.

14. The method according to claim 12 or 13, wherein the step of growing plants comprises growing the plants under stress conditions.

15. A composition for promoting the initial plant growth comprising allantoin and 0.009 parts by weight to 50 parts by weight of amino acid, relative to 100 parts by weight of the allantoin.

16. A composition for promoting the plant growth under stress conditions comprising allantoin and 0.009 parts by weight to 50 parts by weight of amino acid, relative to 100 parts by weight of the allantoin.

17. A composition for increasing the plant yield comprising allantoin and 0.009 parts by weight to 50 parts by weight of amino acid, relative to 100 parts by weight of the allantoin.
